# FASCICULE DE BREVET EUROPEEN

(11) **EP 3 450 028 B1**
(45) Date de publication et mention de la délivrance du brevet: **09.06.2021**
(21) Numéro de dépôt: 18192557.9
(22) Date de dépôt: 04.09.2018
(51) Int. Cl.: B07C 5/02, B65G 47/244

(54) **DISPOSITIF ET PROCÉDÉ DE TRI DE BOÎTES**
VORRICHTUNG UND VERFAHREN ZUM SORTIEREN VON SCHACHTELN
DEVICE AND METHOD FOR SORTING BOXES

(30) Priorité: 05.09.2017 FR 1758183
(43) Date de publication de la demande: 06.03.2019
(73) Titulaire: Pharmacie Automatisme, 83520 Roquebrune Sur Argens (FR)
(72) Inventeur: NIZARD, Stéphane, 06000 Nice (FR)
(74) Mandataire: Brizio Delaporte, Allison

(56) Documents cités:
- EP-A1- 1 829 802
- EP-A1- 2 724 960
- WO-A2-2006/010032
- FR-A1- 2 675 786
- GB-A- 2 205 078

## Description

### DOMAINE TECHNIQUE

La présente invention concerne un dispositif de stockage et de délivrance de boites.

Le domaine de l'invention concerne plus particulièrement un dispositif de tri de boites, ledit dispositif permettant d'orienter les boites selon leur sens longitudinal. La présente invention trouvera une application dans des secteurs tels que les supermarchés, commerces, mais trouvera une application plus particulière dans les officines de pharmacie.

### ETAT DE LA TECHNIQUE

En officine, le nombre de références de médicaments à stocker est de plus en plus problématique. Aujourd'hui, des installations de stockage et de délivrance de médicaments plus ou moins automatisées sont installées dans les pharmacies pour tenter de réduire le temps nécessaire au stockage et/ou à la livraison des médicaments.

Il existe des dispositifs pour assister les pharmaciens pour l'introduction des médicaments dans l'installation de stockage. Ces dispositifs permettent le tri et/ou l'identification des médicaments de manière automatique.

Ces innovations constituent des gains de temps essentiels pour les pharmaciens qui peuvent se consacrer au conseil de leur clientèle.

Les installations comprennent souvent deux parties fonctionnelles. Une première partie dans laquelle les médicaments sont stockés après avoir été identifiés, souvent sur des étagères, puis délivrés au poste de délivrance de l'officine en fonction de la commande effectuée par le pharmacien. Les installations comprennent également une deuxième partie, parfois éloignée de la première, où les objets sont initialement disposés en vrac.

A partir de cette deuxième partie, les boîtes de médicaments sont, soit scannées pour être identifiées et rangées par le pharmacien, soit uniquement scannées par le pharmacien et les médicaments sont ensuite rangés sur des étagères par un système mécanique tel qu'un préhenseur.

Une troisième alternative est de déverser les boîtes de médicaments en vrac sur une surface, de sorte qu'un dispositif mécanique identifie les boîtes, identifie leur orientation et que ces dernières soient saisies par un robot manipulateur, notamment un préhenseur, puis rangées, notamment sur des étagères, en fonction des données relatives à leur identification.

Cependant, la préhension des boîtes par un robot manipulateur implique que ces dernières soient préalablement orientées afin d'être saisies par ledit robot manipulateur. Il existe donc le besoin d'un système permettant une orientation des boîtes afin notamment que ces dernières soient efficacement saisies par un robot manipulateur.

De plus, on s'aperçoit que les pharmacies doivent toujours trouver des locaux plus grands pour agencer les dispositifs de stockage, de délivrance, de tri et/ou d'identification. Ce qui amène les pharmacies à réduire leur surface de vente directe aux clients. Or, cette surface est de plus en plus appréciée par les clients et il n'est pas efficace pour le pharmacien de la réduire.

Afin de réduire au maximum la surface utilisée, il convient préférentiellement d'avoir une surface sur laquelle l'ensemble des boîtes est disposé en vrac sans aucun tri, et qu'à partir de cette surface les boîtes soient séparées, triées et orientées.

Il existe donc le besoin de développer un dispositif de tri automatique de boîtes variées afin que ledit système mette à disposition les boîtes au robot manipulateur. Le système doit de préférence opérer en continu et ne pas freiner le processus de délivrance du médicament, il doit avantageusement permettre l'orientation et l'identification de boîtes de taille, poids et géométries variables, à partir d'un vrac, manipulation de ces dernières, tout en limitant au maximum l'encombrement du système.

Dans ce contexte, le dispositif de tri devrait mettre à disposition une boîte au robot manipulateur en moins de dix secondes, de sorte à ne pas constituer « un goulot d'étranglement ». La capacité du dispositif devrait traiter l'ensemble des références (souvent plus de 4000) et ce malgré leur hétérogénéité en terme de poids, taille, rigidité, le dispositif devant également traiter les nouvelles références qui entrent dans le stock de l'officine tous les mois (exemples : nouveaux génériques, nouveaux médicaments). Enfin la capacité du système doit aussi avantageusement accueillir l'intégralité d'une commande grossiste type, soit environ 400 boîtes, en une fois et sans ajout d'une zone de stockage externe.

Confronté à cette problématique, il est envisageable de coupler un dispositif d'analyse d'images et un dispositif de préhension. Le dispositif d'analyse d'images fournit des informations au dispositif de préhension afin que ce dernier isole et oriente les articles. Cette approche relativement conventionnelle présente des inconvénients majeurs. La manipulation des objets est risquée, les languettes des boîtes cartonnées s'ouvrent assez facilement lors d'une manipulation à partir d'un vrac. Dès lors que la languette est ouverte, le contenu peut s'échapper et le système de manipulation peut se retrouver dans l'incapacité de traiter cette situation. Le manipulateur peut également saisir l'objet en occultant la face sur laquelle se trouve le code, notamment un code datamatrix permettant de l'identifier.

En ce cas, on aboutit à un échec d'identification et le manipulateur doit reposer l'objet et le saisir différemment pour ne pas occulter le code lors de la tentative d'identification suivante. De plus, l'ensemble de ces manipulations est long et l'on s'aperçoit que le système de tri devient un « goulot d'étranglement » qui ralentit le manipulateur en charge du rangement et de la délivrance.

La demande de brevet EP1748004A1 propose un procédé permettant la mesure d'une boîte et son orientation dans le sens désiré. Le dispositif permettant cette mesure et cette orientation comprend une surface circulaire sur laquelle est disposée une boîte. Cette surface comprend un mouvement de rotation permettant de modifier la position de la boîte. Le dispositif comprend des mâchoires contre lesquelles la boîte va venir en butée. La surface en rotation, couplée à ce système de butée et un dispositif de mesure, permettent l'orientation des boîtes dans une position désirée.

Ce procédé implique de nombreuses étapes et nécessite un temps accru pour arriver à une position désirée. De plus, une surface circulaire implique une perte de surface importante de stockage des boîtes. Enfin, l'orientation de la boîte sur la surface utilisée implique le cheminement dans un premier temps de la boîte jusqu'à cette surface de mesure et d'orientation, puis une prise de la boîte par un robot manipulateur, augmentant donc encore les étapes de délivrance d'une boîte.

Il existe au regard de cette antériorité le besoin d'un dispositif permettant l'acheminement d'une boîte jusqu'au robot manipulateur (en vue de son rangement) tout en orientant ladite boîte afin de faciliter sa préhension sans constituer de ralentissement de la chaine de rangement et de délivrance du médicament. De plus ce dispositif doit occuper le moins de surface possible.

La demande de brevet EP2724960A1 concerne une installation de stockage de boîtes de médicaments. Elle comprend des canaux destinés à recevoir des boîtes et un circuit de triage des boîtes situé au-dessus et en dessous des canaux. Cette demande décrit un circuit de triage des boîtes comprenant un tube mobile en oscillation incliné, un plan incliné permettant le passage des boîtes par gravité, un dispositif de mesure et un dispositif d'identification des boîtes. Ce dispositif présente l'avantage de décrire une organisation optimisée du dispositif de stockage des boîtes exploitant au maximum les volumes morts. Il décrit également une pré-orientation des tubes grâce à un cylindre oscillant.

Cependant, il existe au regard de cette antériorité le besoin d'un dispositif permettant l'orientation des boîtes selon un sens déterminé, afin d'être saisies par un robot manipulateur, notamment un préhenseur. Il existe également le besoin d'un dispositif de triage permettant en plus de l'identification des boîtes de gérer la progression des boîtes au sein du dispositif afin de ne pas constituer de goulot d'étranglement.

### EXPOSE DE L'INVENTION

La présente invention propose à cet effet suivant un aspect un dispositif de tri de boîtes selon la revendication 1. Le dispositif comprend une surface de réception de boîtes comprenant un premier et un deuxième pans (de préférence non verticaux) formant entre eux un angle non nul, un système moteur permettant une translation de boîtes, ledit système moteur étant configuré pour entraîner les boîtes dans un sens d'avance suivant une direction longitudinale des pans, et comportant un moyen d'application d'un moment de force à la boîte configuré pour tendre à faire basculer la boîte suivant un axe perpendiculaire au deuxième pan et à la direction longitudinale.

Le moment de force peut correspondre à l'exercice d'un couple par lequel, si le centre de gravité de la boîte correspondante est placé de manière défavorable relativement à la surface de réception (en particulier si la direction longitudinale de la boîte est dirigée perpendiculairement à la direction d'avance des moyens moteurs), la boîte basculera vraisemblablement de sorte à orienter sa direction longitudinale parallèlement à la direction longitudinale des pans. Par cette disposition de l'invention, on réalise avantageusement une réorientation des boîtes sans intervention humaine, sans intervention d'un robot et préférentiellement de manière continue. En particulier, les moyens moteurs de l'invention peuvent comprendre une ou plusieurs bandes mobiles autorisant l'avance régulière des boîtes les unes derrière les autres et leur réorientation successive.

Le système moteur comprend une première surface d'appui d'une première portion de boîte, mobile dans le sens d'avance suivant la direction longitudinale, comprenant au moins une première bande mobile suivant la direction longitudinale et portée par le premier pan et au moins une deuxième bande mobile suivant la direction longitudinale et portée par le deuxième pan ; une deuxième surface d'appui d'une deuxième portion de boîte, au moins partiellement mobile suivant la direction longitudinale, portée par le deuxième pan, et dans lequel la première et la deuxième surfaces d'appui ont un différentiel de vitesse suivant la direction longitudinale configuré pour appliquer le moment de force à la boîte.

Avantageusement, le deuxième pan de la surface de réception forme une surface d'appui des boîtes pour leur guidage suivant la direction de translation, le premier pan étant configuré pour retenir les boîtes à l'encontre de la gravité. Ainsi, globalement, le premier pan est situé en dessous du deuxième suivant la verticale.

Avantageusement, le basculement que le moment de force a tendance à opérer s'effectue en sens inverse à celui de l'avance des boîtes.

Avantageusement, ladite première bande mobile entraîne la boîte sur la direction longitudinale. La deuxième surface d'appui exerce une force de résistance sur la boîte. La force d'entraînement de la boîte couplée à la force de résistance de la deuxième surface d'appui provoque un mouvement de rotation de la boîte selon un axe perpendiculaire au deuxième pan. Suite à cette rotation, la boîte se retrouve orientée de sorte que son sens longitudinal soit parallèle à la direction longitudinale des moyens moteurs.

Avantageusement, les bandes situées sur la première surface d'appui 6, 6.1 comportent une vitesse similaire.

La capacité de la deuxième surface d'appui 7 d'être au moins partiellement mobile suivant la direction longitudinale permet d'assurer une meilleure orientation des boîtes. En effet, la deuxième surface d'appui mobile supplémentaire aux bandes mobiles de la première surface d'appui facilite le basculement de boîtes placées de manière défavorable sans impacter les boîtes correctement positionnées.

Le dispositif comprend un capteur de présence de boîte agencé à l'extrémité inférieure du deuxième pan et un dispositif de mesure agencé dans le plan du deuxième pan et perpendiculairement à la direction longitudinale des pans.

Ces moyens permettent d'assurer un contrôle du positionnement des boîtes et de prévoir une réponse adaptée à une erreur de positionnement.

Suivant un autre aspect, l'invention concerne un procédé de tri de boîtes comprenant :
- la réception d'au moins une boîte sur une surface de réception de boîtes comprenant un premier pan et un deuxième pan formant entre eux un angle non nul,
- une translation de la au moins une boîte par un système moteur configuré pour entraîner la boîte dans un sens d'avance suivant une direction longitudinale des pans, caractérisé en ce qu'il comporte une application d'un moment de force à ladite au moins une boîte configuré pour tendre à faire basculer suivant un axe perpendiculaire au deuxième pan, l'application d'un moment de force est exercé par une première surface d'appui d'une première portion de boîte, mobile dans le sens d'avance suivant la direction longitudinale comprenant au moins une première bande mobile suivant la direction longitudinale et portée par le premier pan et au moins une deuxième bande mobile suivant la direction longitudinale et portée par le deuxième pan, et par une deuxième surface d'appui d'une deuxième portion de boîte, mobile dans le sens d'avance suivant la direction longitudinale, portée par le deuxième pan, et dans lequel la première et la deuxième surfaces d'appui ont un différentiel de vitesse suivant la direction longitudinale configuré pour appliquer le moment de force à la boîte.

Le procédé de tri selon l'invention comprend une étape de vérification du positionnement des boîtes comprenant :
- la détection d'une boîte sur la première surface d'appui par un capteur de présence,
- la mesure d'une dimension de la boîte perpendiculaire à la direction longitudinale des pans par un dispositif de mesure.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les figures d'accompagnement suivantes dans lesquelles :

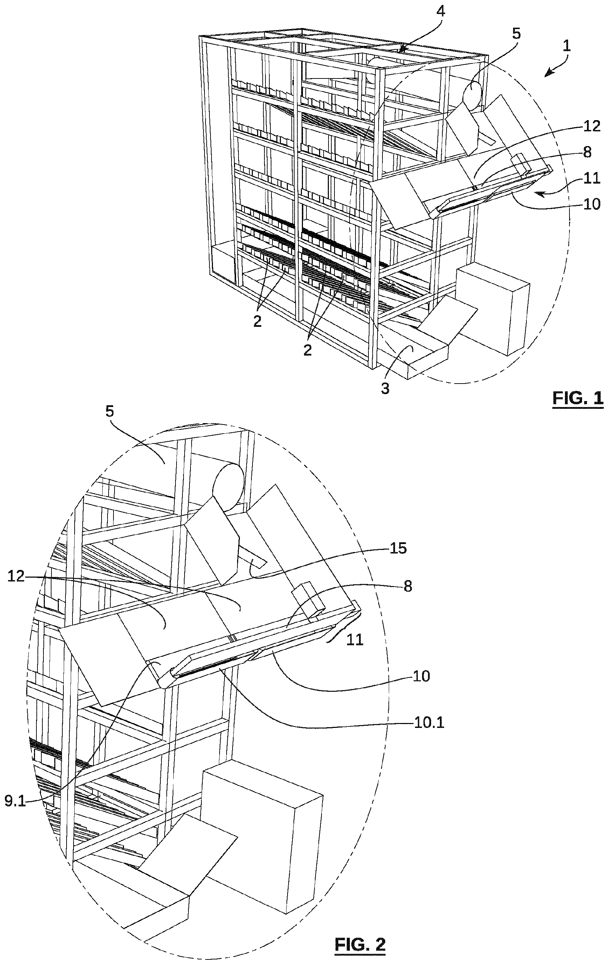

Figure 1 : vue de face en perspective d'une installation selon l'invention.
Figure 2 : vue de détail côté droit de l'installation.
Figure 3 : schéma représentant une vue de face de l'installation.

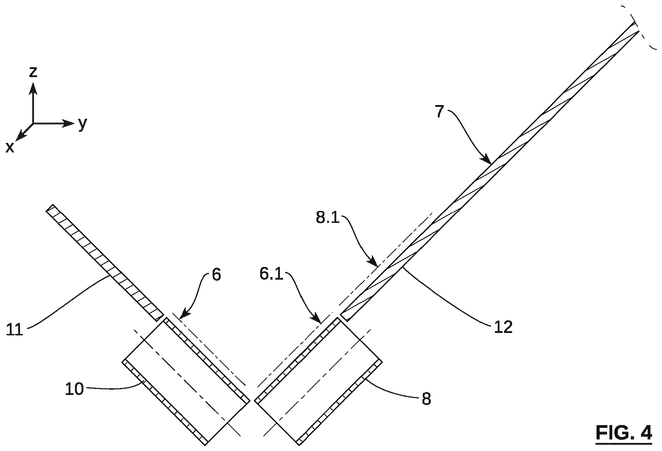

Figure 4 : vue en coupe des deux pans selon l'invention.
Figures 5 à 8 : vue de détail de face du dispositif de tri selon l'invention dans différents cas de figures.

### EXPOSE DETAILLE DE MODES DE REALISATION PARTICULIERS

Avant d'entamer une revue détaillée de modes de réalisation de l'invention, sont énoncées ci-après des caractéristiques optionnelles qui peuvent éventuellement être utilisées en association ou alternativement :
- la deuxième surface d'appui 7 présente sur au moins une partie un coefficient de frottement relativement au papier cartonné supérieur à 0.3.

Avantageusement, ce coefficient de frottement permet de créer une force de résistance sur la partie de la boîte en contact avec ladite deuxième surface d'appui 7. Ce coefficient de frottement s'entend d'une valeur entre le matériau des boîtes, particulièrement du papier cartonné, et le matériau de la partie correspondant de la surface d'appui.
- la deuxième surface d'appui 7 comporte un tapis fixé sur une portion du deuxième pan 12 ;
- la deuxième surface d'appui 7 comprend une vitesse inférieure en norme, et/ou de sens opposé à la vitesse de la première surface d'appui 6, 6.1 suivant la direction d'avance ;
- la deuxième bande 8 est située plus proche du premier pan 11 que la deuxième surface d'appui 7.

Avantageusement, la deuxième bande 8 est située dans le premier tiers du deuxième pan 12 à partir de la jonction formée par les deux pans 11, 12 et est distincte de la deuxième surface d'appui 7.
- La deuxième bande 8 est située à une extrémité inférieure dudit deuxième pan 12, ladite bande possédant de préférence une largeur inférieure à 2 cm.

Avantageusement, la largeur de ladite bande 8 doit être inférieure à la largeur des boîtes.
- La deuxième surface d'appui 7 comporte une première bande de résistance mobile 8.1 agencée parallèlement à la deuxième bande mobile 8 ;
- la deuxième surface d'appui 7 comporte une deuxième bande de résistance 8.2 agencée parallèlement à la deuxième bande mobile 8 ;
- la première bande de résistance 8.1 et la deuxième bande de résistance 8.2 sont plus courtes que la deuxième bande mobile 8 ;
- la première bande de résistance 8.1 et la deuxième bande de résistance 8.2 ont une vitesse inférieure en norme et/ou en sens opposé à la vitesse de la deuxième bande mobile 8 ;
- la surface de réception est divisée en plusieurs tronçons suivant la direction longitudinale ;
- le système moteur est configuré pour produire un entraînement différent des boîtes dans chaque tronçon ;
- les tronçons comprennent un tronçon, par exemple aval, avec un entraînement séquentiel des boîtes et un tronçon, par exemple amont, avec un entraînement continu des boîtes ;
- la largeur d'au moins un tronçon, suivant une dimension perpendiculaire à la direction longitudinale, est inférieure à 12 mm ;
- au moins une bande appartenant au premier pan 11 est une bande entraineuse ;
- au moins une bande appartenant au deuxième pan 12 est une bande entraineuse ;

Le procédé de tri selon l'invention comprend une étape de vérification du positionnement des boîtes comprenant :
- la détection d'une boîte sur la première surface d'appui 6, 6.1 par un capteur de présence 20,
- la mesure d'une dimension de la boîte perpendiculaire à la direction longitudinale des pans par un dispositif de mesure 21.

Préférentiellement, en fonction des informations issues du capteur de présence 20 et du dispositif de mesure 21, une erreur de positionnement est identifiée et une étape de rectification d'erreur est initiée.

Avantageusement, le moment de force est exercé sur la boîte de sorte à appliquer une force motrice, dans le sens d'avance 22 en dessous du centre de gravité de la au moins une boîte et une force résistante dans un sens contraire au sens d'avance au-dessus du centre de gravité de la au moins une boîte.

Le procédé de tri selon l'invention comprend avantageusement une étape de rectification d'erreur de positionnement de boîte comprenant :
- un arrêt du déplacement des boîtes
- un retour en arrière des boîtes, notamment par le déplacement en sens inverse des bandes mobiles 8, 10,
- un arrêt du déplacement
- un déplacement des boîtes, notamment par le déplacement des bandes mobiles 8, 10 selon le sens d'avance22.

Le dispositif comprend éventuellement :
- un télémètre à ultrasons ;
- une cellule optique ;
- un dispositif d'identification des boîtes 17 ;
- un dispositif de mesure 18 des boîtes.

Les bandes, le dispositif de mesure 18, le dispositif d'identification 17 des boîtes, et éventuellement les autres éléments ci-dessus cités sont associés à un dispositif de commande du dispositif de transfert 13.

Le moment de force est exercé sur la boîte de sorte à appliquer une force motrice, dans le sens d'avance 22 en dessous du centre de gravité de la au moins une boîte et une force résistante dans un sens contraire au sens d'avance au-dessus du centre de gravité de la au moins une boîte.

D'une manière générale, les boîtes peuvent être constituées par des enveloppes de forme parallélépipédique rectangle. Elles présentent donc trois dimensions dont l'une, plus importante ou égale aux autres, et ici dénommée dimension longue, direction longitudinale ou encore longueur.

Les boîtes sont amenées à se déplacer sur une surface de réception, avantageusement entre deux postes. La surface de réception a de préférence une direction longitudinale, avantageusement orientée horizontalement, correspondant à la direction du mouvement des boîtes à ce niveau.

Selon l'invention, on exerce une contrainte mécanique sur la boîte de sorte à avoir tendance à la faire basculer, en particulier si son centre de gravité est en situation trop en surélévation relativement à l'un des pans de la surface de réception. Cette contrainte mécanique produit une tendance à une rotation de la boîte autour d'un axe de rotation avantageusement perpendiculaire à la direction longitudinale de la surface de réception et perpendiculaire à un deuxième pan 12 de celle-ci. Cette contrainte constitue un moment de force suivant cette direction, moment de force assimilable à un couple. Lors de son déplacement sur la surface de réception grâce au moyen moteur, une boîte opère une translation dans un plan défini par la direction longitudinale (direction de translation) et un pan principal (ici appelé deuxième pan) sur lequel la boîte s'applique. Si c'est la plus grande longueur de la boîte qui est orientée suivant la hauteur de ce plan, le centre de gravité de la boîte est situé un niveau de hauteur maximum relativement à la verticale. Dans ce cas de figure, le moment de force appliqué sera lui-même maximal et aura la plus grande tendance à faire basculer la boîte. C'est l'effet recherché par la présente invention. Ainsi, de manière générale, la présente invention permet de révéler que le centre de gravité de la boîte est situé à un niveau de hauteur, suivant une direction verticale, trop élevé.

On donne ci-après un exemple de réalisation de la présente invention en référence aux différentes figures. Ces figures font appel à un déplacement des boîtes sur la surface de réception par des bandes mobiles. Cependant, cette réalisation n'est qu'indicative.

Dans le cas illustré, le dispositif de tri de l'invention s'intègre dans une installation plus générale dont un exemple est ci-après décrit sans intention de limiter l'invention.

L'installation comprend par exemple au moins un module 1 comprenant une pluralité de canaux 2. Les canaux 2 sont destinés à recevoir des objets. Ces objets peuvent être de formes diverses telles que des boîtes, tubes ou flacons. Le terme « boîtes » utilisé dans cette demande englobe différentes formes d'objets. Comme indiqué précédemment, les boîtes sont cependant avantageusement de forme parallélépipédique rectangle. Elles peuvent être en papier cartonné.

Le module 1 comprend un châssis définissant un volume intérieur au sein duquel sont intégrés les canaux 2. Les canaux 2 sont juxtaposés les uns à côté des autres et superposés les uns au-dessus des autres.

On entend par canal, une étagère horizontale ou inclinée, munie ou non de séparateurs formant des conduits. Chaque module peut combiner différents types de canaux 2 ou bien l'installation peut comporter plusieurs modules 1, chaque module 1 comprenant un seul type de canaux 2. Préférentiellement, les canaux 2 inclinés sont destinés aux médicaments à forte rotation, tandis que les canaux 2 horizontaux seront préférés pour stocker les médicaments à basse rotation. Quel que soit le type des canaux 2, ils sont configurés pour stocker des boîtes.

L'installation comprend un dispositif de tri 4 destiné à trier les boîtes pour faciliter leur stockage dans les canaux 2.

Le dispositif de tri 4 est, dans les figures, agencé au moins partiellement au-dessus et en dessous des canaux 2. On entend par « au-dessus » que le dispositif de tri est agencé en partie supérieure du module 1. De même, « en dessous » s'entend par agencé en partie inférieure 9 du module 1. Le dispositif de tri peut être disposé dans le volume intérieur constitué par le châssis du module 1, soit à l'extérieur du volume intérieur constitué par le châssis du module 1. Avantageusement, le dispositif de tri est disposé au moins partiellement dans les zones mortes de l'installation. On entend par zone morte, les zones au-dessus et en dessous des canaux 2. En effet, les canaux 2 ne sont généralement pas agencés du sol au plafond, une zone morte est laissée notamment pour permettre la circulation d'un dispositif de préhension et/ou de délivrance utilisé pour stocker et déstocker les boîtes. Cette zone morte est d'autant plus importante lorsque le module 1 comporte des canaux 2 inclinés. Généralement les zones mortes ne sont pas utilisées pour le stockage.

Le circuit de triage 4 comprend une entrée 3 par laquelle les boîtes sont introduites dans le circuit et une sortie 6 où les boîtes sont saisies par un robot manipulateur, notamment un préhenseur et rangées sur les étagères.

Selon une possibilité, le dispositif de tri comprend un dispositif de convoyage 3. Préférentiellement, le dispositif de convoyage 3 est un tapis de transport à bande. Les boîtes sont déversées sur ce dispositif de sorte à les stocker en vue de leur déversement progressif dans la suite du circuit. Le dispositif de convoyage 3 joue un rôle de zone-tampon au début du circuit. Avantageusement, le dispositif de convoyage est agencé en partie inférieure de l'installation, préférentiellement au moins partiellement en dessous des canaux 2.

Le circuit comprend avantageusement un dispositif élévateur destiné à permettre aux boîtes d'être transférées d'un niveau de hauteur à un autre niveau de la hauteur, plus précisément de la zone inférieure à la zone supérieure. Le dispositif élévateur est agencé dans l'installation pour transporter les boîtes entre le dispositif de convoyage 3 situé sous les canaux 2 et le dispositif de tri 4 situé au-dessus des canaux 2. Le dispositif élévateur est par exemple une bande à deux pans suspendue entre deux points de sorte à former un U ou bien une plateforme mobile entre les différents niveaux de hauteur.

Le dispositif de tri comprend un dispositif de pré-orientation 5 comprenant un tube ou un demi-tube oscillant ou bien encore un tube mobile en rotation autour de son axe longitudinal pour orienter les boîtes dans le sens de leur grande longueur. Le tube ou demi-tube est incliné avec son axe longitudinal orienté vers un dispositif de transfert 13 des boîtes, transférant les boîtes sur une surface comprenant deux pans 11 et 12. Préférentiellement, le dispositif de pré-orientation 5 est un tube en oscillation, entraînant un cheminement gravitaire des boîtes, même avec une pente très faible.

A l'extrémité du dispositif de pré-orientation 5, les boîtes arrivent par gravité sur un dispositif de transfert 13 des boîtes. Ce dispositif de transfert est placé à un angle d'environ 45° avec le sol de manière à ce que les boîtes glissent dessus par gravité et atteignent le tapis 7.

Le dispositif de transfert 13 est composé d'une surface 14 sur laquelle les boîtes glissent et d'une butée 15 perpendiculaire à la surface 14. Cette butée 15 est orientée de préférence selon un angle d'environ 45° par rapport au plan au sol, elle entraîne donc les boîtes pré-orientées dans le sens de leur longueur, vers une deuxième butée 16 qui est sensiblement dans le plan perpendiculaire au sol. Autrement dit, les boîtes glissent le long de la première butée 15 et sont entraînées vers la deuxième butée 16 où un de leur côté longitudinal se plaque contre cette butée 16.

Avantageusement si plusieurs boîtes glissent sur le long de la surface 14, la butée 15 est capable de se rétracter selon un plan perpendiculaire à la surface 14. La butée 15 ne fait plus saillie au sein de la surface 14 et ne s'oppose donc plus au glissement des boîtes le long de la surface 14. Avantageusement, cette caractéristique permet, lorsque plusieurs boîtes sont présentes sur la surface 14, de laisser glisser l'ensemble des boîtes jusqu'aux pans 11 et 12, et de ne pas bloquer ou ralentir le processus de progression des boîtes au sein du dispositif de tri 4.

Les boîtes glissent du dispositif de transfert 13 vers les deux pans 11 et 12. Les deux pans 11 et 12 forment de préférence un angle d'environ 90°. La boîte, par gravité, vient en butée contre le premier pan 11. Celui-ci est avantageusement configuré pour contrer la gravité et maintenir la boîte sur la surface de réception formée par les deux pans 11, 12. Les deux pans 11 et 12 présentent plusieurs surfaces d'application des boîtes. Une partie de cette surface d'application peut être utilisée pour produire un entraînement desdites boîtes sur la surface de réception. Le premier pan 11 comporte une première partie d'une première surface d'appui 6, le deuxième pan 12 la deuxième partie de la première surface d'appui 6.1 et une deuxième surface d'appui 7. La boîte peut venir en contact avec les pans 11 et 12 par ces deux surfaces d'appui 6, 6.1 et 7.

Le premier pan 11 comporte dans le cas représenté une bande mobile 10, et le deuxième pan 12 comporte également une bande mobile 8. Ces deux bandes mobiles constituent au moins partiellement la première surface d'appui 6, 6.1 de la boîte. Ces deux bandes mobiles 8 et 10 possèdent avantageusement une surface avec des propriétés agrippantes (c'est-à-dire présentant un coefficient de frottement sur le matériau des boîtes supérieur à celui de zones de la surface de réception au niveau desquelles on souhaite un glissement de ces boîtes) et permettent l'avancement des boîtes au sein du dispositif de tri des boîtes.

Avantageusement, les bandes situées sur la première surface d'appui 6, 6.1 comportent une vitesse similaire.

Les termes « bande mobile » ici employés font notamment référence à un dispositif comportant une courroie et un système d'entraînement de ladite courroie dans un mouvement continu, par exemple sous l'effet d'un entraînement rotation d'un galet.

Le deuxième pan 12 comporte en outre une deuxième surface d'appui 7. La deuxième surface d'appui 7 peut être employée pour exercer la force résistante de génération du couple appliqué à la boîte. Cette deuxième surface possède de préférence des propriétés agrippantes et permettent de créer une force résistante sur la boîte. Comme pour les bandes mobiles 8 et 10, il peut s'agir de caoutchouc ou d'élastomère. Dans un mode de réalisation, la deuxième surface d'appui 7 comprend un tapis sous forme de nappe mince en matériaux avec un coefficient de frottement plus élevé que le reste du deuxième pan, de sorte à augmenter la friction des boîtes à ce niveau et résister à leur avance. Il peut s'agir également de caoutchouc ou d'élastomère. De manière préférée, cette deuxième surface d'appui 7 comprend une première bande de résistance 8.1 mobile cherchant à créer un effort résistant à l'avance de la boîte. Avantageusement, la deuxième surface 7 comprend une deuxième bande de résistance 8.2 mobile cherchant à créer un effort résistant à l'avance de la boîte. La deuxième surface d'appui 7 peut comprendre de la même manière d'autres bandes de résistance.

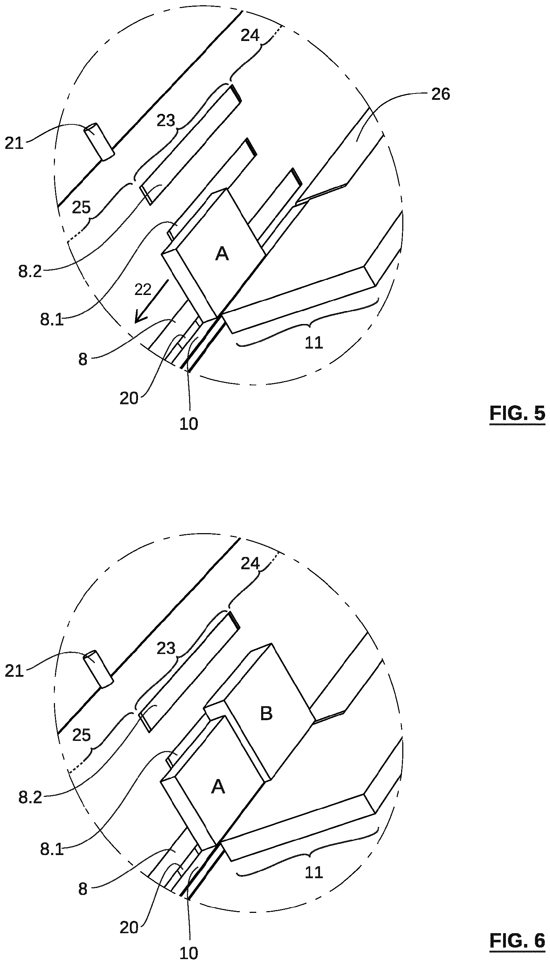

Préférentiellement, et tel qu'illustré aux figures 5 à 8, les bandes de résistance 8.1 et 8.2 sont agencées de manière parallèle à la bande mobile 8 de la première surface d'appui. Les bandes de résistance 8.1 et 8.2 sont plus éloignées du premier pan 11 que la première bande mobile 8.

Les bandes de résistance peuvent être de longueurs différentes entre-elles et différente de la bande mobile8. Préférentiellement, les bandes de résistance 8.1, 8.2 sont de longueur inférieure à la longueur de la bande mobile 8 définissant de cette manière une portion de basculement sur laquelle les boîtes basculent, en rotation, par l'application du moment de force.

Les bandes de résistance 8.1 et 8.2 sont avantageusement mobiles avec une vitesse différente ou similaire de même sens, mais de vitesse inférieure ou de sens opposé aux autres bandes mobiles 8 et 10.

Les bandes de résistances présentent une largeur du même ordre que les autres bandes mobiles et en tout cas inférieure à la plus grande dimension des boîtes à trier.

En résumé, l'application de la force résistante peut se faire de différentes manières, notamment par le biais d'une bande mobile et/ou d'une surface fixe tant que ces moyens sont configurés pour contrarier l'avance de la boîte.

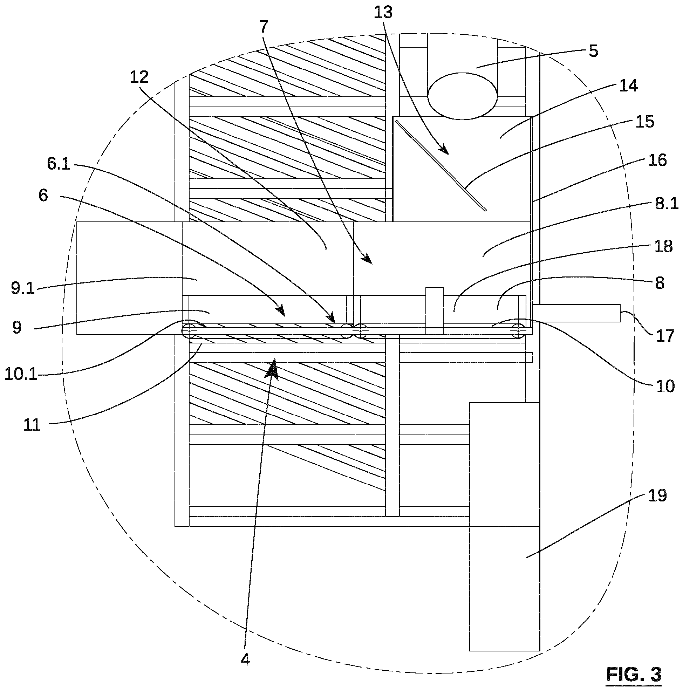

Préférentiellement, le dispositif de tri 4 comporte au moins une première bande mobile 10 sur le premier pan 11 et au moins une deuxième bande mobile 8 sur le deuxième pan 12. Cependant le dispositif de tri 4 peut comprendre plusieurs tronçons d'avance des boîtes. Dans ce cas, la surface de réception est divisée en autant de portions se suivant selon la direction longitudinale correspondant à l'avance des boîtes. Les explications indiquées ci-dessus en référence aux moyens d'application d'un moment de force peuvent être appliquées à au moins un desdits tronçons. On peut donc ainsi former sur le premier pan 11 et sur le deuxième pan 12 des bandes mobiles juxtaposées se suivant selon l'axe longitudinal. Dans le cas de la figure 3, deux tronçons sont présentés, un premier avec des bandes d'avance 10, 8 (et une première bande de résistance mobile 8.1 et/ou un tapis) et un deuxième avec des bandes d'avance 10.1, 9 (et une deuxième bande de résistance mobile 9.1 et/ou un tapis).

Cette disposition peut notamment permettre de réguler la densité de boîtes le long de la surface de réception, par différentiation des vitesses et/ou phases d'avance des boîtes sur les tronçons. En effet, en cas d'encombrement, notamment lorsque plusieurs boîtes sont présentes sur l'ensemble de la surface de réception, on peut stopper un tronçon amont le temps de résorber l'encombrement en aval, puis reprendre un rythme régulier. Dans le cas illustré, le premier tronçon opère de manière séquentielle (ses moyens d'avance sont configurés de la sorte), avec des phases successives d'avance et d'arrêt et alimente ainsi progressivement le deuxième tronçon. Le deuxième tronçon peut fonctionner avec une avance continue. Ainsi le système permet de contrôler l'avancée des boîtes au sein du dispositif et d'éviter tout encombrement et blocage du processus.

Ainsi, de manière générale, la surface de réception peut être organisée en plusieurs tronçons suivant la direction longitudinale. On peut organiser les moyens moteurs de manière séparée sur chacun de ces tronçons pour gérer distinctement l'avance des boîtes sur lesdits tronçons. De cette façon, si un tronçon est encombré, il est possible de stopper ou de décélérer les tronçons en amont, ou d'opérer toute différenciation de l'avance des moyens moteurs des différents tronçons.

Le premier tronçon peut par ailleurs avoir un effet résistant à l'avance moindre que le deuxième tronçon. Cela peut servir à ne faire basculer que certaines boîtes dans le premier tronçon et à faire basculer les autres boîtes le nécessitant dans le deuxième tronçon seulement. On répartit ainsi les zones de basculement en réduisant les risques de chevauchement des boîtes. Pour ce faire, les moyens résistants sont par exemple moins résistants à l'avance sur le premier tronçon que sur le deuxième. Notamment, un simple tapis peut être employé comme deuxième surface d'appui sur le deuxième pan du premier tronçon alors qu'une bande résistante 9.1 de sens inverse à l'avance est employée sur le deuxième tronçon. On peut aussi ou alternativement jouer sur les différences de coefficient de frottement.

À l'inverse, le premier tronçon peut permettre un basculement plus rapide des grosses boîtes longues, mal positionnées, comme en figure cinq à huit.

Sur les figures 5 à 8, deux tronçons sont représentés, un premier avec les bandes mobiles d'avance 8,10 et les bandes de résistances mobiles 8.1, 8.2, et un deuxième avec les mêmes bandes d'avance 8, 10 uniquement, sans les bandes de résistances 8.1, 8.2.

Un autre intérêt du transfert à tronçons multiples est de varier la largeur (suivant une direction perpendiculaire à celle de l'avance) des premières surfaces d'appui entre les tronçons. De préférence, cette largeur est plus grande sur le premier tronçon que sur le ou les suivants. On peut par ailleurs faire en sorte que la largeur sur le deuxième tronçon soit inférieure ou égale à la plus petite dimension de la plus petite boîte référencée dans l'installation. Alternativement ou cumulativement, cette largeur est inférieure à 12 mm. Elle peut être d'au moins 30 mm sur le premier pan du premier tronçon. On comprend que si une boîte est orientée avec sa direction longitudinale selon la dimension en largeur du premier pan, son basculement ne sera pas possible et que son orientation ne pourra donc pas être rectifiée. Alors, cette boîte peut être évacuée au passage sur le tronçon de plus faible largeur, la boîte basculant de la bande 10.1 qui est très peu large et qui n'offre pas un appui permettant à la boîte de se maintenir sur le premier pan. Un bac de réception, ou un chemin de recyclage, peut être prévu pour que ce type de boîtes repasse dans le système de triage ou fasse l'objet d'un traitement manuel.

On donne ci-après un résumé des étapes de tri des boîtes. Avantageusement, lorsqu'une boîte est en contact avec la surface des bandes mobiles, elle subit un couple de force permettant son orientation si elle n'est pas déjà bien orientée.

Avantageusement, après être passée par le dispositif de transfert 13, la boîte arrive sur les deux pans 11 et 12 de la surface de réception. La boîte est en appui sur ces pans par l'intermédiaire de la première partie de sa première surface d'appui 6, par la deuxième partie de sa première surface d'appui 6.1 et par sa deuxième surface d'appui 7. Par l'intermédiaire de ces surfaces d'appui, la boîte est en contact avec la surface de la bande mobile 8 sur le deuxième pan 12 et de la bande mobile 10 sur le premier pan 11. Les bandes mobiles 10 et 8 possèdent la même vitesse de translation, leur vitesse de translation est avantageusement supérieure à celle de la bande de résistance mobile 8.1 si cette dernière est présente ou une vitesse nulle s'il s'agit d'un tapis fixé sur le pan 12. Les bandes mobiles 8 et 10 entraînent donc la boîte, alors que la deuxième surface d'appui 7 freine la boîte exerçant donc une force résistante. Un couple de force a lieu sur la boîte, ce couple résulte d'un différentiel entre l'entraînement de la boîte par les bandes mobiles 8 et 10 et le frottement de la boîte sur la deuxième surface d'appui.

On a donc en présence une force tendant à l'avance de la boîte et, en sens inverse, mais toujours suivant la direction longitudinale, une force résistante. Ces efforts créent un couple qui tend à faire tourner la boîte, plus précisément à faire basculer la boîte vers l'arrière relativement au sens d'avance suivant un axe perpendiculaire au deuxième pan 12.

Si la boîte est déjà orientée de sorte que sa longueur soit parallèle à la direction longitudinale, elle est stable et le couple n'est pas suffisant pour la faire basculer. Si ce n'est pas le cas, le couple l'emporte et fait basculer la boîte qui se remet dans sa position naturelle la plus stable à savoir le sens de la longueur. Il est entendu que les dimensions de la boîte doivent être adéquates relativement au positionnement relatif des surfaces d'appui. Il n'est pas exclu que pour certaines boîtes, notamment de petites dimensions, le dispositif de l'invention ne soit pas approprié ou ne soit pas efficace en un seul passage sur le dispositif de tri, par exemple si le centre de gravité de la boîte est fort bas ; mais il est possible de recycler la boîte en cause pour opérer un nouveau passage sur les surfaces d'appui. Cependant, sur l'ensemble des références de boîtes de médicaments habituellement sur le marché et nécessitant un stockage, une très large majorité peut être employée efficacement avec le dispositif de tri de l'invention. D'une manière générale, il est avantageux de choisir un positionnement de la deuxième surface d'appui 7 de telle sorte qu'elle exerce majoritairement un effort résistant sur un des côtés de la boîte lorsque celle-ci est dirigée avec sa longueur orientée la hauteur du deuxième pan 12. À l'inverse, la première surface d'appui est avantageusement positionnée en partie basse de la surface de réception, et particulièrement majoritairement ou totalement au niveau du premier pan 11, de sorte que le frottement (orienté à cet endroit dans le sens de l'avance) s'exerce totalement ou majoritairement en dessous du centre de gravité de la boîte.

Le dispositif de l'invention comprend avantageusement un dispositif de mesure 18 des boîtes et/ou un dispositif d'identification 17.

Avantageusement ces dispositifs transmettent les données à une unité informatique 19, qui commande alors les bandes mobiles 8, 10, 8.1, 8.2, ainsi que la butée 15, permettant l'avancée des boîtes au sein du dispositif.

A titre préféré, le dispositif selon invention comprend un capteur de présence 20, par exemple un laser tout ou rien. Tel qu'illustré aux figures 5 à 8, le capteur de présence 20 est disposé sur le deuxième pan 12, préférentiellement à l'extrémité inférieure du deuxième pan 12, à proximité du premier pan 11. Le capteur de présence est également disposé préférentiellement à proximité de l'extrémité avale de la deuxième surface d'appui 6.1, c'est-à-dire plus précisément à l'extrémité avale d'une portion de basculement. Le capteur de présence 20 est destiné à vérifier la présence de boîte sur la surface de réception. Les informations reçues du capteur de présence 20 permettent en combinaison avec les informations de la vitesse de déplacement d'une bande mobile portant la boîte de connaitre la dimension de la boîte parallèle à la direction longitudinale des pans 11 et 12.

Avantageusement, le dispositif comprend un dispositif de mesure additionnel 21. Ce dispositif de mesure 21 est agencé dans le plan du deuxième pan 12 et perpendiculairement à la direction longitudinale des pans 11 et 12. Le dispositif de mesure 21 est par exemple un télémètre laser ou ultrason qui mesure la distance séparant le dispositif d'une boîte. Le dispositif de mesure 21 est avantageusement disposé à la verticale du capteur de présence 20.

L'unité informatique 19 peut ainsi vérifier notamment si la dimension de la boîte parallèle à la direction longitudinale des pans 11 et 12 est supérieure de la dimension de la boîte perpendiculaire à la direction longitudinale des pans 11 et 12.

Ces dispositifs sont destinés à permettre l'identification d'erreur de positionnement des boîtes pour les supprimer.

Plusieurs cas de figures sont représentés aux figures 5 à 8.

En figure 5, une seule boîte A se situe sur la portion de basculement. La boîte A est correctement positionnée avec sa plus grande dimension orientée suivant la direction longitudinale. On remarque alors que la bande 8.1 n'est quasiment pas en contact avec la boîte n'exerçant ainsi aucune résistance suffisante pour faire à nouveau basculer la boîte.

A la figure 6, deux boîtes A et B sont en appui sur le premier pan 11 et le deuxième pan 12. La première boîte A est avantageusement identique à la figure 5. La deuxième boîte B chevauche la première boîte A. Le déplacement des boîtes A et B se fait suivant la direction longitudinale des pans 11 et 12 et dans le sens d'avance 22. Le chevauchement des deux boîtes A et B est tel que l'application d'un moment de force pour faire basculer la deuxième boîte B n'est pas suffisant. Ainsi lorsque les deux boîtes A et B arrivent à la fin du tronçon de basculement comprenant la première bande de résistance mobile 8.1 et la deuxième bande de résistance mobile 8.2, elles passent devant le faisceau du dispositif de mesure 21 et devant le faisceau du capteur de présence 20. C'est l'étape de vérification de la position des boîtes. Ces informations sont traitées par l'unité informatique 19. En fonction des informations reçues et traitées par l'unité informatique 19, une étape de rectification d'erreur est initiée. Dans le cas présent, l'unité informatique 19 donnera les instructions pour l'étape de de rectification d'erreur comprenant par exemple un arrêt du déplacement des boîtes, notamment par l'arrêt du déplacement des bandes mobiles 8 et 10, ainsi qu'avantageusement de l'arrêt des bandes de résistance 8.1 et 8.2, puis un retour en arrière par le déplacement des boîtes A et B en sens inverse du sens d'avance 22, soit jusqu'à ramener les boîtes A et B sur la portion de précédente : portion de séparation 24 pour permettre la séparation des deux boîtes lors de leur passage séquentiel sur la portion de basculement 23, un arrêt du déplacement des boîtes puis le déplacement à nouveau des boîtes A et B dans le sens d'avance 22. Cet ensemble d'étapes permet avantageusement de séparer les boîtes et de refaire passer les boîtes sur le tronçon de basculement 23 pour remettre la boîte B dans une position souhaitée c'est-à-dire son axe longitudinal parallèle à la direction longitudinale des pans.

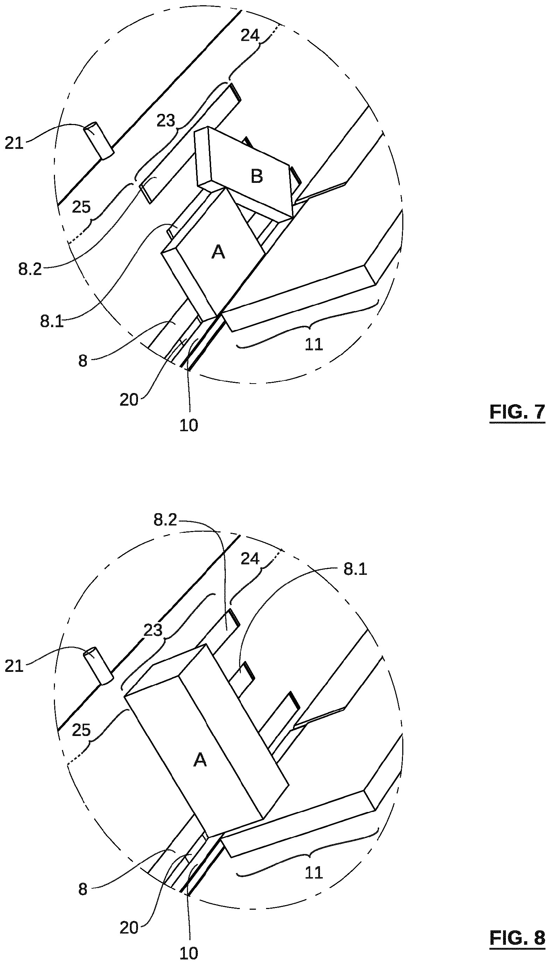

En figure 7, une seule boîte A est sur la portion de basculement 23. La boîte n'est pas positionnée correctement, sa plus grande dimension étant orientée perpendiculairement à la direction longitudinale. La boîte est positionnée à l'extrémité aval de la portion de basculement 23. Lorsque celle-ci passe au niveau du dispositif de mesure 21 et du capteur de présence 20, l'unité informatique 19 constate que la dimension suivant la direction longitudinale, mesurée à partir des données de présence du capteur de présence 20 et de la vitesse de déplacement de la bande mobile 8, est inférieure à la dimension suivant une direction dans le plan 12 et perpendiculaire à la direction longitudinale, mesurée à partir des données du dispositif de mesure 21,et donne pour instruction de refaire passer la boîte sur la portion de basculement 23, en reprenant les étapes décrites en référence à la figure 6. En parallèle, si l'unité informatique 19 ne réagit pas à cette erreur, la boîte sera évacuée par sa chute hors du pan 11 lorsqu'elle passera sur le tronçon ultérieur 25 dans lequel le pan 11 est de largeur inférieure.

En figure 8, deux boîtes accolées et correctement positionnées se déplacent sur le tronçon de basculement 23. Lorsque les boîtes passent devant le capteur de présence 20 et que le dispositif de mesure 21 mesure leur hauteur, l'unité informatique 19 va identifier une erreur. Dans ce cas-là, la rectification de l'erreur consistera à un retour en arrière des boîtes suivant l'ensemble d'étapes décrit en référence à la figure 6. Les boîtes repartent en arrière jusqu'à la jonction avec le tronçon de séparation 24. L'avancée séquentielle de la bande d'amenée 26 permet de faire passer successivement les deux boîtes sur le tronçon de basculement et donc de séparer les deux boîtes accolées.

De manière alternative ou cumulative, il est possible de prévoir une avancée séquentielle des bandes 8,10 lors de la jonction avec le tronçon ultérieur 25 comprenant les bandes mobiles 9 et 10.1 de la figure 3.

D'autres modulations des sens de déplacement des bandes mobiles et des bandes de résistance peuvent être prévues pour résoudre une erreur de positionnement.

À la sortie du dispositif de tri, une très large majorité des boîtes se trouve correctement orientée de sorte à faciliter la suite du process comprenant notamment la préhension par un bras robotisé.

### REFERENCES

- 1.: Module
- 2.: Canaux
- 3.: Dispositif de convoyage
- 4.: Dispositif de tri des boîtes
- 5.: Dispositif de pré-orientation/ tube oscillant
- 6.: 1^{ère} surface d'appui - 1^{ère} partie
- 6.1.: 1^{ère} surface d'appui - 2^{ème} partie
- 7.: 2^{ème} surface d'appui
- 8.: Deuxième bande mobile
- 8.1.: Bande de résistance mobile
- 8.2: Bande de résistance mobile
- 9.: Bande mobile
- 9.1.: Bande de résistance mobile
- 10.: Première bande mobile
- 10.1.: Bande mobile
- 11.: 1^{er} pan
- 12.: 2^{ème} pan
- 13.: Dispositif de transfert des boîtes
- 14.: Surface de glissement
- 15.: Butée
- 16.: Butée
- 17.: Dispositif d'identification
- 18.: Dispositif de mesure
- 19.: Unité informatique
- 20.: Capteur de présence
- 21.: Dispositif de mesure
- 22.: Sens d'avance
- 23.: Portion de basculement
- 24.: Portion de séparation
- 25.: Portion ultérieure
- 26.: Bande d'amenée

## Revendications

1. Dispositif de tri de boîtes (4) comprenant une surface de réception de boîtes comprenant un premier et un deuxième pans (11, 12) formant entre eux un angle non nul, un système moteur permettant une translation de boîtes, ledit système moteur étant configuré pour entraîner les boîtes dans un sens d'avance (22) suivant une direction longitudinale des pans (11, 12), et
comportant un moyen d'application d'un moment de force à la boîte configuré pour tendre à faire basculer la boîte suivant un axe perpendiculaire au deuxième pan (12) et à la direction longitudinale, ledit système moteur comprenant :
- une première surface d'appui (6, 6.1) d'une première portion de boîte, mobile dans le sens d'avance (22) suivant la direction longitudinale ; la première surface d'appui (6, 6.1) comprenant au moins une première bande mobile (10) suivant la direction longitudinale et portée par le premier pan (11) et au moins une deuxième bande mobile (8) suivant la direction longitudinale et portée par le deuxième pan (12), **caractérisé en ce que** ledit système moteur comprend :
- une deuxième surface d'appui (7) d'une deuxième portion de boîte, au moins partiellement mobile dans le sens d'avance (22) suivant la direction longitudinale, portée par le deuxième pan (12),
et dans lequel la première et la deuxième surfaces d'appui (6, 6.1, 7) ont un différentiel de vitesse suivant la direction longitudinale configuré pour appliquer le moment de force à la boîte,
et qu'il comprend un capteur de présence de boîte (20) agencé à l'extrémité inférieure du deuxième pan (12) et un dispositif de mesure (21) des boîtes agencé dans le plan du deuxième pan (12) et perpendiculaire à la direction longitudinale des pans (11, 12).

2. Dispositif selon la revendication précédente, dans lequel la deuxième surface d'appui (7) présente sur au moins une partie un coefficient de frottement relativement au papier cartonné supérieur à 0.3.

3. Dispositif selon l'une quelconque des revendications précédentes, dans lequel la deuxième surface d'appui (7) comporte un tapis fixé sur une portion du deuxième pan (12).

4. Dispositif selon l'une quelconque des revendications précédentes, dans lequel la deuxième surface d'appui (7) comprend une vitesse inférieure en norme, et/ou de sens opposé à la vitesse de la première surface d'appui (6, 6.1) suivant la direction d'avance.

5. Dispositif selon l'une quelconque des revendications précédentes dans lequel la deuxième bande (8) est située plus proche du premier pan (11) que la deuxième surface d'appui (7).

6. Dispositif selon la revendication précédente, dans lequel la deuxième bande (8) est située à une extrémité inférieure dudit deuxième pan (12), ladite bande (8) possédant de préférence une largeur comprise inférieure à 2 cm.

7. Dispositif selon l'une quelconque des revendications précédentes dans lequel la deuxième surface d'appui (7) comporte une première bande de résistance mobile (8.1) agencée parallèlement à la deuxième bande mobile (8).

8. Dispositif selon la revendication précédente dans lequel la deuxième surface d'appui (7) comporte une deuxième bande de résistance mobile (8.2) agencée parallèlement à la deuxième bande mobile (8).

9. Dispositif selon la revendication précédente dans lequel la première bande de résistance (8.1) et la deuxième bande de résistance (8.2) sont plus courtes que la deuxième bande mobile (8).

10. Dispositif selon l'une quelconque des deux revendications précédentes dans lequel la première bande de résistance (8.1) et la deuxième bande de résistance (8.2) ont une vitesse inférieure en norme et/ou en sens opposé à la vitesse de la deuxième bande mobile (8).

11. Dispositif selon l'une des revendications précédentes, dans lequel la surface de réception est divisée en plusieurs tronçons suivant la direction longitudinale, le système moteur étant configuré pour produire un entraînement différent des boîtes dans chaque tronçon.

12. Dispositif selon la revendication précédente, dans lequel les tronçons comprennent un tronçon aval avec un entraînement séquentiel des boîtes et un tronçon amont avec un entraînement continu des boîtes, la largeur d'au moins un tronçon, suivant une dimension perpendiculaire à la direction longitudinale, étant inférieure à 12 mm.

13. Procédé de tri de boîtes par le dispositif selon l'une quelconque des revendications précédentes comprenant :
- la réception d'au moins une boîte sur une surface de réception de boîtes comprenant un premier pan (11) et un deuxième pan (12) formant entre eux un angle non nul,
- une translation de la au moins une boîte par un système moteur (20) configuré pour entraîner la boîte dans un sens d'avance (22) suivant une direction longitudinale des pans (11, 12),
**caractérisé en ce qu'**il comporte une application d'un moment de force à ladite au moins une boîte configuré pour tendre à faire basculer suivant un axe perpendiculaire au deuxième pan (12), l'application d'un moment de force est exercé par une première surface d'appui (6, 6.1) d'une première portion de boîte, mobile dans le sens d'avance (22) suivant la direction longitudinale comprenant au moins une première bande mobile (10) suivant la direction longitudinale et portée par le premier pan (11) et au moins une deuxième bande mobile (8) suivant la direction longitudinale et portée par le deuxième pan (12), et par une deuxième surface d'appui (7) d'une deuxième portion de boîte, mobile dans le sens d'avance (22) suivant la direction longitudinale, portée par le deuxième pan (12),
et dans lequel la première et la deuxième surfaces d'appui (6, 6.1, 7) ont un différentiel de vitesse suivant la direction longitudinale configuré pour appliquer le moment de force à la boîte,
et que le procédé comprend une étape de vérification du positionnement des boîtes comprenant :
- la détection d'une boîte sur la première surface d'appui (6, 6.1) par un capteur de présence (20)
- la mesure d'une dimension de la boîte perpendiculaire à la direction longitudinale des pans par un dispositif de mesure (21),

14. Procédé selon la revendication précédente dans lequel le moment de force est exercé sur la boîte de sorte à appliquer une force motrice, dans le sens d'avance (22) en dessous du centre de gravité de la au moins une boîte et une force résistante dans un sens contraire au sens d'avance au-dessus du centre de gravité de la au moins une boîte.

15. Procédé selon l'une quelconque des deux revendications précédentes comprenant une étape de rectification d'erreur comprenant :
- l'arrêt du déplacement des boîtes sur les bandes mobiles (8, 10)
- le retour en arrière des boîtes par le déplacement en sens inverse des bandes mobiles (8, 10),
- l'arrêt du déplacement des boîtes sur les bandes mobiles (8, 10)
- le déplacement des boîtes par le déplacement des bandes mobiles (8, 10) selon le sens de tri (22).

## Patentansprüche

1. Vorrichtung zum Sortieren von Schachteln (4), eine Fläche zur Aufnahme von Schachteln umfassend, die eine erste und eine zweite Seitenfläche (11, 12) umfasst, die zueinander einen Winkel ungleich null bilden, ein Motorsystem, das einen Vorschub von Schachteln ermöglicht, wobei das Motorsystem konfiguriert ist, um die Schachteln in einer Vorlaufrichtung (22) entlang einer Längsrichtung der Seitenflächen (11, 12) anzutreiben, und
ein Mittel zum Anlegen eines Kraftmoments an der Schachtel beinhaltend, das konfiguriert ist, um dazu zu tendieren, die Schachtel entlang einer zur zweiten Seitenfläche (12) und zur Längsrichtung senkrechten Achse kippen zu lassen, wobei das Motorsystem Folgendes umfasst:
- eine erste Anlegefläche (6, 6.1) eines ersten Schachtelabschnitts, die in der Vorlaufrichtung (22) entlang der Längsrichtung beweglich ist; wobei die erste Anlegefläche (6, 6.1) mindestens ein erstes, entlang der Längsrichtung bewegliches, und von der ersten Seitenfläche (11) getragenes Band (10), und mindestens ein zweites, entlang der Längsrichtung bewegliches, und von der zweiten Seitenfläche (12) getragenes Band (8) umfasst, **dadurch gekennzeichnet, dass** das Motorsystem umfasst:
- eine zweite Anlegefläche (7) eines zweiten Schachtelabschnitts, die in der Vorlaufrichtung (22) entlang der Längsrichtung mindestens teilweise beweglich ist, von der zweiten Seitenfläche (12) getragen,
und wobei die erste und zweite Anlegefläche (6, 6.1, 7) einen Geschwindigkeitsunterschied entlang der Längsrichtung aufweisen, der konfiguriert ist, um das Kraftmoment an der Schachtel anzulegen,
und dass es einen Schachtelpräsenzmelder (20) umfasst, der am unteren Ende der zweiten Seitenfläche (12) angeordnet ist, und eine Messvorrichtung (21) der Schachteln, die in der Ebene der zweiten Seitenfläche (12) und senkrecht zur Längsrichtung der Seitenflächen (11, 12) angeordnet ist.

2. Vorrichtung nach dem vorstehenden Anspruch, wobei die zweite Anlegefläche (7) auf mindestens einem Teil einen Reibungskoeffizienten in Bezug auf den Karton von mehr als 0,3 aufweist.

3. Vorrichtung nach einem der vorstehenden Ansprüche, wobei die zweite Anlegefläche (7) einen Teppich beinhaltet, der auf einem Abschnitt der zweiten Seitenfläche (12) befestigt ist.

4. Vorrichtung nach einem der vorstehenden Ansprüche, wobei die zweite Anlegefläche (7) eine in der Norm und/ oder in entgegengesetzter Richtung zur Geschwindigkeit der ersten Anlegefläche (6, 6.1) entlang der Vorlaufrichtung geringere Geschwindigkeit umfasst.

5. Vorrichtung nach einem der vorstehenden Ansprüche, wobei das zweite Band (6) näher an der ersten Seitenfläche (11) gelegen ist, als die zweite Anlegefläche (7).

6. Vorrichtung nach dem vorstehenden Anspruch, wobei das zweite Band (8) an einem unteren Ende der zweiten Seitenfläche (12) gelegen ist, wobei das Band (8) vorzugsweise eine Breite besitzt, die in weniger als 2 cm enthalten ist.

7. Vorrichtung nach einem der vorstehenden Ansprüche, wobei die zweite Anlegefläche (7) ein erstes bewegliches Widerstandsband (8.1) beinhaltet, das parallel zum zweiten beweglichen Band (8) angeordnet ist.

8. Vorrichtung nach dem vorstehenden Anspruch, wobei die zweite Anlegefläche (7) ein zweites bewegliches Widerstandsband (8.2) beinhaltet, das parallel zum zweiten beweglichen Band (8) angeordnet ist.

9. Vorrichtung nach dem vorstehenden Anspruch, wobei das erste Widerstandsband (8.1) und das zweite Widerstandsband (8.2) kürzer sind als das zweite bewegliche Band (8).

10. Vorrichtung nach einem der beiden vorstehenden Ansprüche, wobei das erste Widerstandsband (8.1) und das zweite Widerstandsband (8.2) eine in der Norm und/ oder in entgegengesetzter Richtung zur Geschwindigkeit des zweiten beweglichen Bandes (8) geringere Geschwindigkeit aufweisen.

11. Vorrichtung nach einem der vorstehenden Ansprüche, wobei Aufnahmefläche in mehrere Teilabschnitte in der Längsrichtung unterteilt ist, wobei das Motorsystem konfiguriert ist, um einen unterschiedlichen Antrieb der Schachteln in jedem Teilabschnitt zu erzeugen.

12. Vorrichtung nach dem vorstehenden Anspruch, wobei die Teilabschnitte einen stromabwärtigen Teilabschnitt mit einem sequentiellen Antrieb der Schachteln und einen stromaufwärtigen Teilabschnitt mit einem kontinuierlichen Antrieb der Schachteln umfassen, wobei die Breite mindestens eines Teilabschnitts entlang einer zur Längsrichtung senkrechten Abmessung kleiner als 12mm ist.

13. Verfahren zum Sortieren von Schachteln durch die Vorrichtung nach einem der vorstehenden Ansprüche, Folgendes umfassend:
- das Aufnehmen mindestens einer Schachtel auf einer Aufnahmefläche von Schachteln, die eine erste Seitenfläche (11) und eine zweite Seitenfläche (12) umfasst, die zueinander einen Winkel ungleich null bilden,
- einen Vorschub der mindestens einen Schachtel durch ein Motorsystem (20), das konfiguriert ist, um die Schachtel in einer Vorlaufrichtung (22) entlang einer Längsrichtung der Seitenflächen (11, 12) anzutreiben,
**dadurch gekennzeichnet, dass** es ein Anlegen eines Kraftmoments an der mindestens einen Schachtel beinhaltet, das konfiguriert ist, um dazu zu tendieren, die Schachtel entlang einer zur zweiten Seitenfläche (12) senkrechten Achse kippen zu lassen, wobei das Anlegen eines Kraftmoments durch eine erste Anlegefläche (6, 6.1) eines ersten Schachtelabschnitts ausgeübt wird, die in der Vorlaufrichtung (22) entlang der Längsrichtung beweglich ist, mindestens ein erstes, entlang der Längsrichtung bewegliches, und von der ersten Seitenfläche (11) getragenes Band (10), und mindestens ein zweites, entlang der Längsrichtung bewegliches, und von der zweiten Seitenfläche (12) getragenes Band (8) umfassend, und durch eine zweite Anlegefläche (7) eines zweiten Schachtelabschnitts, die die in der Vorlaufrichtung (22) entlang der Längsrichtung beweglich ist, die von der zweiten Seitenfläche (12) getragen wird,
und wobei die erste und zweite Anlegefläche (6, 6.1, 7) einen Geschwindigkeitsunterschied entlang der Längsrichtung aufweisen, der konfiguriert ist, um das Kraftmoment an der Schachtel anzulegen,
und dass das Verfahren einen Schritt des Überprüfens der Positionierung der Schachteln umfasst, Folgendes umfassend:
- das Detektieren einer Schachtel auf einer ersten Anlegefläche (6, 6.1) durch einen Präsenzmelder (20)
- das Messen einer Abmessung der Schachtel senkrecht zur Längsrichtung der Seitenflächen durch eine Messvorrichtung (21),

14. Verfahren nach dem vorstehenden Anspruch, wobei das Kraftmoment auf die Schachtel ausgeübt wird, um eine Antriebskraft in der Vorlaufrichtung (22) unterhalb des Schwerpunktes der mindestens einen Schachtel und eine Widerstandskraft in einer entgegengesetzten Richtung zur Vorlaufrichtung oberhalb des Schwerpunktes der mindestens einen Schachtel anzulegen.

15. Verfahren nach einem der beiden vorstehenden Ansprüche, einen Schritt zum Korrigieren eines Fehlers umfassend, der Folgendes umfasst:
- Anhalten der Fortbewegung der Schachteln auf den beweglichen Bändern (8, 10)
- Rückführen der Schachteln durch das Fortbewegen in entgegengesetzter Richtung der beweglichen Bänder (8, 10)
- Anhalten der Fortbewegung der Schachteln auf den beweglichen Bändern (8, 10)
- Fortbewegen der Schachteln durch das Fortbewegen der beweglichen Bänder (8, 10) in der Sortierrichtung (22).

## Claims

1. Device for sorting boxes (4) comprising a surface for receiving boxes comprising a first and a second sides (11, 12) forming a non-zero angle between them, a motor system allowing for a translation of boxes, said motor system being configured to drive the boxes in a forward direction (22) in a longitudinal direction of the sides (11, 12), and
comprising a means for applying a force moment to the box configured to tend to tilt the box along an axis perpendicular to the second side (12) and to the longitudinal direction, said motor system comprising:
- a first bearing surface (6, 6.1) of a first box portion, mobile in the forward direction (22) in the longitudinal direction; the first bearing surface (6, 6.1) comprising at least one first mobile strip (10) in the longitudinal direction and borne by the first side (11) and at least one second strip mobile (8) in the longitudinal direction and borne by the second side (12), **characterised in that** said motor system comprises:
- a second bearing surface (7) of a second box portion, at least partially mobile in the forward direction (22) in the longitudinal direction, borne by the second side (12),
and wherein the first and second bearing surfaces (6, 6.1, 7) have a speed differential in the longitudinal direction configured to apply the force moment to the box,
and that it comprises a box presence sensor (20) arranged at the lower end of the second side (12) and a device for measuring (21) boxes arranged in the plane of the second side (12) and perpendicular to the longitudinal direction of the sides (11, 12).

2. Device according to the preceding claim, wherein the second bearing surface (7) has on at least one portion a friction coefficient relative to the cardboard greater than 0.3.

3. Device according to any preceding claim, wherein the second bearing surface (7) comprises a belt fixed on a portion of the second side (12).

4. Device according to any preceding claim, wherein the second bearing surface (7) comprises a speed less in norm, and/or of a direction opposite the speed of the first bearing surface (6, 6.1) in the forward direction.

5. Device according to any preceding claim wherein the second strip (8) is located closer to the first side (11) than the second bearing surface (7).

6. Device according to the preceding claim, wherein the second strip (8) is located at a lower end of said second side (12), said strip (8) preferably having a width less than 2 cm.

7. Device according to any preceding claim wherein the second bearing surface (7) comprises a first mobile resistance strip (8.1) arranged parallel to the second mobile strip (8).

8. Device according to the preceding claim wherein the second bearing surface (7) comprises a second mobile resistance strip (8.2) arranged parallel to the second mobile strip (8).

9. Device according to the preceding claim wherein the first resistance strip (8.1) and the second resistance strip (8.2) are shorter than the second mobile strip (8).

10. Device according to any of the two preceding claims wherein the first resistance strip (8.1) and the second resistance strip (8.2) have a speed less in norm and/or in the direction opposite the speed of the second mobile strip (8).

11. Device according to one of the preceding claims, wherein the surface for receiving is divided into several segments in the longitudinal direction, the motor system being configured to produce a different driving of the boxes in each segment.

12. Device according to the preceding claim, wherein the segments comprise a downstream segment with a sequential driving of the boxes and an upstream segment with a continuous driving of the boxes, the width of at least one segment, in a dimension perpendicular to the longitudinal direction, being less than 12 mm.

13. Method for sorting boxes by the device according to any preceding claim comprising:
- receiving at least one box on a surface for receiving boxes comprising a first side (11) and a second side (12) forming a non-zero angle between them,
- translating the at least one box by a motor system (20) configured to drive the box in a forward direction (22) in a longitudinal direction of the sides (11, 12),
**characterised in that** it comprises an application of a force moment to said at least one box configured to tend to tilt along an axis perpendicular to the second side (12), the application of a force moment is exerted by a first bearing surface (6, 6.1) of a first box portion, mobile in the forward direction (22) in the longitudinal direction comprising at least one first mobile strip (10) in the longitudinal direction and borne by the first side (11) and at least one second mobile strip (8) in the longitudinal direction and borne by the second side (12), and by a second bearing surface (7) of a second box portion, mobile in the forward direction (22) in the longitudinal direction, borne by the second side (12),
and wherein the first and second bearing surfaces (6, 6.1, 7) have a speed differential in the longitudinal direction configured to apply the force moment to the box,
and that the method comprises a step of verifying the positioning of the boxes comprising:
- detecting a box on the first bearing surface (6, 6.1) by a presence sensor (20)
- measuring a dimension of the box perpendicular to the longitudinal direction of the sides by a measuring device (21),

14. Method according to the preceding claim wherein the force moment is exerted on the box in such a way as to apply a driving force, in the forward direction (22) below the centre of gravity of the at least one box and a resistant force in a direction opposite to the forward direction above the centre of gravity of the at least one box.

15. Method according to any of the two preceding claims comprising a step of error rectification comprising:
- stopping the movement of the boxes on the mobile strips (8, 10)
- the moving backwards of the boxes via the movement in the opposite direction of the mobile strips (8, 10),
- the stopping of the movement of the boxes on the mobile strips (8, 10)
- the movement of the boxes by the movement of the mobile strips (8, 10) according to the sorting direction (22).
